# EUROPÄISCHE PATENTSCHRIFT

(11) **EP 0 667 370 B1**
(45) Veröffentlichungstag und Bekanntmachung des Hinweises auf die Patenterteilung: **14.08.2002**
(21) Anmeldenummer: 95101990.0
(22) Anmeldetag: 14.02.1995
(51) Int. Cl.: C08K 3/36, C08L 75/04

(54) **Verbundschaumstoffe, Verfahren zu ihrer Herstellung und ihre Verwendung**
Foam laminates, process for their preparation and their use
Mousses stratifiées, procédé pour leurs préparation et leurs utilisation

(30) Priorität: 15.02.1994 DE 4404701
(43) Veröffentlichungstag der Anmeldung: 16.08.1995
(73) Patentinhaber: CABOT CORPORATION, Boston, Massachusetts 02210-2019 (US)
(72) Erfinder: Behme, Klaus-Jürgen, D-65817 Eppstein (DE); Jansen, Rolf-Michael, Dr., D-65799 Kelkeim (DE); Zimmermann, Andreas, Dr., D-64347 Griesheim (DE)
(74) Vertreter: Luderschmidt, Schüler & Partner GbR

(56) Entgegenhaltungen:
- EP-A- 0 489 319
- EP-A- 0 513 573
- DE-B- 1 203 458
- US-A- 3 598 772
- DATABASE WPI Week 8119, Derwent Publications Ltd., London, GB; AN 33350D 'STRONG LIGHTWEIGHT INORGANIC BOARD MANUFACTURING' & JP-A-56 028 225 (ISHIKAWA) 19. März 1981

## Beschreibung

Die Erfindung betrifft neuartige Verbundschaumstoffe aus SiO₂-Aerogel-Partikeln und Kunststoffschäumen, sowie deren Herstellung und Verwendung.

Konventionelle Schaumstoffe werden in der Regel unter Verwendung von organischen Treibmitteln, wie Fluor- oder Fluorchlorkohlenwasserstoffen (FKW oder FCKW) oder Kohlenwasserstoffen (Pentan-Isomere) hergestellt. Das in den Zellen des Schaumstoffs eingeschlossene Treibmittel ist für das hohe Wärmedämmvermögen (Wärmeleitfähigkeit 0,020 bis 0,040 W/mK) verantwortlich. Diese Treibmittel belasten aber bei einem hohen Halogenanteil die Umwelt, da sie durch Diffusion zumindest teilweise aus dem Schaumstoff emittieren. Die weniger umweltbelastenden halogenfreien Kohlenwasserstoffe haben wegen ihrer Brennbarkeit Nachteile bei der Herstellung und Anwendung der Schaumstoffe. Auch sie werden durch Diffusion während des Gebrauchs kontinuierlich freigesetzt.

SiO₂-Aerogele besitzen ein den Schaumstoffen typischerweise überlegenes Wärmedämmvermögen (< 0,02 W/mK). Sie sind jedoch nicht in beliebiger Formgebung herstellbar, sind bruchempfindlich und zeigen nur eine geringe Druckfestigkeit.

SiO₂-Aerogele können durch einen Sol-Gel-Prozeß aus geeigneten Precursormaterialien in einem Lösungsmittel und anschließende Trocknung bei überkritischen Werten von Temperatur und Druck hergestellt werden. Solche Verfahren sind beispielsweise in EP-A-0 396 076 und WO 92/03378 beschrieben. Diese Trocknungstechnik ist aber sehr aufwendig.

Aus der deutschen Patentanmeldung P 43 42 548.8 ist ferner bekannt, daß man SiO₂-Gele bei unterkritischen Bedingungen trocknen kann, wenn man sie vor dem Trocknen mit einem Silylierungsmittel behandelt. Die auf diese Weise hergestellten Produkte werden vielfach als "SiO₂-Xerogele" bezeichnet. Sie sind hervorragende Wärmeisolationsmittel und enthalten außer SiO₂ nur Luft (in den Poren). Sie lassen sich jedoch nicht ohne weiteres in beliebige, für die Wärmedämmung erwünschte Formen bringen, und ihre mechanische Festigkeit ist relativ gering.

Die SiO₂-Xerogele werden gemäß der oben erwähnten deutschen Patentanmeldung (P 43 42 548.8) dadurch hergestellt, daß man
a) eine wäßrige Wasserglaslösung mit Hilfe eines sauren lonenaustauscherharzes oder einer Mineralsäure auf einen pH-Wert ≤ 3,0 bringt,
b) die dabei entstandene Kieselsäure durch Zugabe einer Base zu einem SiO₂-Gel polykondensiert und, falls in Schritt a) eine Mineralsäure benutzt wurde, das Gel mit Wasser elektrolytfrei wäscht,
c) das in Schritt b) erhaltene Gel mit einem organischen Lösungsmittel solange wäscht, bis der Wassergehalt des Gels ≤ 5 Gew.-% ist,
d) das in Schritt c) erhaltene Gel mit einem Silylierungsmittel umsetzt, und
e) das in Schritt d) erhaltene silylierte Gel bei -30 bis 200 °C und 0,001 bis 20 bar trocknet.

In Schritt a) wird vorzugsweise ein saures lonentauscherharz eingesetzt; dabei sind vor allem solche geeignet, die Sulfonsäuregruppen enthalten. Falls man Mineralsäuren einsetzt, sind vor allem Salzsäure und Schwefelsäure geeignet. Als Wasserglas wird bevorzugt Natrium- oder Kaliumwasserglas verwendet.

In Schritt b) wird als Base im allgemeinen NH₄OH, NaOH, KOH, Al(OH)₃ oder kolloidale Kieselsäure eingesetzt. Falls in Schritt a) eine Mineralsäure verwendet wurde, wird das mit Hilfe der Base erzeugte SiO₂-Gel mit Wasser elektrolytfrei gewaschen; vorzugsweise wird dabei solange gewaschen, bis das ablaufende Waschwasser dieselbe elektrische Leitfähigkeit hat wie entmineralisiertes Wasser.

Vor Schritt c) läßt man das Gel vorzugsweise altern, und zwar im allgemeinen bei 20 bis 90 °C, vorzugsweise bei 20 bis 70 °C, und einem pH-Wert von 6 bis 11, vorzugsweise 6 bis 9. Die Zeit dafür beträgt im allgemeinen 1 bis 48 Stunden, insbesondere 1 bis 24 Stunden.

In Schritt c) wäscht man das Gel vorzugsweise solange mit einem organischen Lösungsmittel, bis der Wassergehalt des Gels kleiner als 2 Gew.-% ist. Als Lösungsmittel werden im allgemeinen aliphatische Alkohole, Ether, Ester oder Ketone, sowie aliphatische oder aromatische Kohlenwasserstoffe verwendet. Bevorzugte Lösungsmittel sind Methanol, Ethanol, Isopropanol, Aceton, Tetrahydrofuran, Essigsäureethylester, Dioxan, n-Hexan und Toluol. Man kann auch Gemische aus den genannten Lösungsmitteln verwenden. Ferner ist es möglich zuerst das Wasser mit einem Alkohol auszuwaschen und dann diesen mit einem Kohlenwasserstoff auszuwaschen.

Die Schritte a) bis c) werden im allgemeinen bei einer Temperatur zwischen dem Gefrierpunkt der Lösung und 70 °C durchgeführt.

In Schritt d) wird das lösungsmittelhaltige Gel mit einem Silylierungsmittel umgesetzt. Als Silylierungsmittel werden im allgemeinen Silane der Formeln R¹₄₋ₙSiClₙ oder R¹₄₋ₙSi(OR²)ₙ mit n = 1 bis 3 eingesetzt, wobei R¹ und R² unabhängig voneinander C₁-C₆-Alkyl, Cyclohexyl oder Phenyl sind. Auch Silazane sind geeignet. Vorzugsweise verwendet man Mono-, Di- oder Trimethylchlorsilan, Trimethylmethoxysilan oder Hexamethyldisilazan. Die Umsetzung wird im allgemeinen bei 20 bis 100 °C, vorzugsweise 30 bis 70 °C durchgeführt, wenn nötig in einem Lösungsmittel.

Vor Schritt e) wird das silylierte Gel vorzugsweise mit einem protischen oder aprotischen Lösungsmittel gewaschen, bis unumgesetztes Silylierungsmittel im wesentlichen entfernt ist (Restgehalt ≤ 1 Gew.-%). Geeignete Lösungsmittel sind dabei die bei Schritt c) genannten. Analog sind die dort als bevorzugt genannten Lösungsmittel auch hier bevorzugt.

In Schritt e) wird das silylierte, und vorzugsweise danach gewaschene Gel bei Temperaturen von -30 bis 200 °C, vorzugsweise 0 bis 100 °C, sowie Drücken von 0,001 bis 20 bar, vorzugsweise 0,01 bis 5 bar, insbesondere 0,1 bis 2 bar, getrocknet. Höhere Temperaturen als 200 °C und/oder höhere Drücke als 20 bar sind ohne weiteres möglich, sie sind aber mit überflüssigem Aufwand verbunden und bringen keine Vorteile mit sich. Der Vorteil dieses Verfahrens liegt darin, daß bei der Trocknung Temperaturen und Drücke genügen, die für die üblichen Lösungsmittel weit unter deren kritischen Temperaturen und Drücke liegen. Die Trocknung wird im allgemeinen so lange fortgeführt, bis das Gel einen Lösungsmittel-Restgehalt von weniger als 0,1 Gew.-% hat.

Die auf diese Art hergestellten SiO₂-Xerogel-Partikel haben im allgemeinen einen Durchmesser von 0,01 bis 30 mm, und eine Dichte von 0,1 bis 0,6 g/cm³.

Die Wärmeleitfähigkeit eines derartigen SiO₂-Partikels liegt bei 0,01 bis 0,02 W/mK. Die Wärmeleitfähigkeit (λ-Wert) einer Schüttung aus solchen Partikeln ist von der Partikelgröße abhängig. Eine Schüttung aus großen Partikeln enthält große, mit Luft gefüllte Hohlräume, und daher hat die Schüttung fast denselben λ-Wert wie Luft (0,024 W/mK), wie in Tabelle 1 gezeigt.

**Tabelle 1**

| Partikelgröße (mm) | Partikelform | Wärmeleitfähigkeit (W/mK, 24 °C) |
|---|---|---|
| 10 - 30 | Stäbe | 0,033 |
| 1 - 5 | Granulat | 0,024 |
| < 1 | Pulver | 0,021 |

Die Verwendung oder Mitverwendung von kleinen SiO₂-Partikeln (Durchmesser < 1mm) führt zu einer weiteren Verringerung der Wärmeleitfähigkeit wie aus Tabelle 1 zu ersehen ist.

Es wurde nun gefunden, daß man Wärmedämmstoffe mit hoher mechanischer Festigkeit und hoher Wärmedämmfähigkeit in beliebigen geometrischen Formen herstellen kann, wenn man SiO₂-Aerogel-Partikel mit Schaum umschäumt. Dazu werden SiO₂-Aerogel-Partikel in einen entsprechend geformten Behälter geschüttet und mit einem Gemisch versetzt, das die für die Schaum-Synthese erforderlichen Komponenten enthält. Der aushärtende Schaum umhüllt die Partikel und verbindet sie miteinander in der vorgesehenen Form. Das Volumen der Schüttung der Partikel soll dabei 10 bis 90 % des Volumens des fertigen Verbundschaumstoffs betragen, d.h. 10 bis 90 % des Volumens des geformten Behälters, in dem dieser hergestellt wird. 90 bis 10 % des Volumens des fertigen Verbundschaumstoffs entfallen auf den Schaum.

Ein Gegenstand der Erfindung ist daher ein Verbundschaumstoff, der
a) 10 - 90 Vol.-% silylierte SiO₂-Xerogel=Partikel und
b) 90 - 10 Vol-% eines Kunststoff-Schaumes enthält.

Die Volumenprozente sind dabei auf das Volumen des fertigen Verbundschaumstoffs bezogen.

Die Aerogele werden durch Trocknung eines geeigneten Gels hergestellt. Erfindungsgemäß sind unter Aerogelen im weiteren Sinne "Gele mit Luft als Dispersionsmittel" zu verstehen.

Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel.

Erfindungsgemäß werden unterkritisch getrocknete Aerogele (sog. Xerogele) eingesetzt. Sie lassen sich gegenüber überkritisch getrockneten Aerogelen einfacher, d.h. bei niedrigeren Temperaturen und geringeren Drücken, herstellen, und sind aufgrund der durch die Silylierung eingefügten Gruppen (bevorzugt Trimethylsilylgruppen) dauerhaft hydrophob.

Die erfindungsgemäß verwendeten. Xerogel-Partikel weisen vorzugsweise Porositäten über 60 % und Dichten unter 0,6 g/cm³ auf. Darüber hinaus liegt der Durchmesser der Gel-Partikel vorzugsweise im Bereich von 0,01 bis 30 mm.

Als Kunststoffschaum wird erfindungsgemäß vorzugsweise ein Polyurethanund/oder Polyolefinschaum verwendet.

Dabei kann als Polyolefin beispielsweise ein Linear Low Density Polyethylen (LLDPE), ein High-Density-Polyethylen (HDPE) oder ein Ethylen-Vinylacetat (EVA) sowie ein Polypropylen Homo- bzw. Copolymer eingesetzt werden.

Die Herstellung und Anwendung von Polyolefinschaumstoffen ist bekannt und beispielsweise in Ullmann's Encyclopedia of Industrial Chemistry, Vol. A11, insbesondere Seiten 439 bis 444 beschrieben.

Besonders bevorzugt als Kunststoffschaum ist Polyurethan.

Die Herstellung und Anwendung von Polyurethanschaumstoffen ist bekannt und beispielsweise in Kunststoff-Handbuch, Band VII, Polyurethane, Carl Hanser-Verlag München, Wien, 3. Auflage (1993), insbesondere Seiten 271-282, sowie in EP-A-0 077 964, EP-A-0 334 059, DE-AS 1 964 138 (GB-PS 1 209 243) beschrieben.

In Ullmanns Enzyklopädie der technischen Chemie (1980), Band 19, Seiten 301 bis 341, sind die verwendbaren Rohstoffe und die möglichen Verfahren zur Herstellung von Polyurethanhartschaumstoffen zusammenfassend beschrieben.

Des weiteren sind entsprechende Hinweise in Kirk-Othmer, Encycl. of Chem. Technology, 3rd edition, Vol 11 (1980), Pages 87-89 und Vol. 23 (1983), Pages 576-607 zu finden.

Als Treibmittel für das Polyurethan wird vorzugsweise CO₂ verwendet, das bei der Polyurethan-Synthese aus Polyisocyanaten und Verbindungen mit mindestens zwei gegenüber Isocyanatgruppen reaktionsfähigen Wasserstoffatomen (sowie gegebenenfalls weiteren üblichen Zusatzmitteln, z.B. Schaumstabilisatoren) durch Zusatz von Wasser erzeugt wird. Es können statt CO₂ auch sogenannte "physikalische Treibmittel", nämlich leicht flüchtige organische Substanzen, z.B. Kohlenwasserstoffe oder halogenierte Kohlenwasserstoffe verwendet werden. Diese haben aber die eingangs beschriebenen Nachteile.

Erfindungsgemäß als Kunststoffschaum einsetzbar sind aber auch Polycarbonat-, Polysulfon-, Poly(phenylenoxid)-, Polyamid-, Poly(methylacrylat)-, Polymethacrylamid-, Polyimid-, Epoxy- und Siliconschäume, Schäume aus Phenol-, Urethan- und Melamin-Formaldehyd-Harzen sowie Polyvinylchlorid (PVC)-Schäume.

Die erfindungsgemäßen Verbundschaumstoffe weisen vorzugsweise eine Dichte von 0,05 bis 0,6 g/cm³ auf. Ihre Wärmeleitfähigkeit liegt vorzugsweise im Bereich von 0,015 bis 0,040 W/mK.

Ein weiterer Gegenstand der Erfindung ist ein Verfahren zur Herstellung eines Verbundschaumstoffs, das dadurch gekennzeichnet ist, daß man eine Schüttung aus SiO₂-Aerogel Partikeln mit Kunststoffschaum umschäumt, wobei das Volumen der Schüttung 10 bis 90 Vol.% des beabsichtigten Volumens des Verbundschaumstoffs beträgt.

Die so hergestellten Verbundschaumstoffe können zur Wärmedämmung verwendet werden, beispielsweise als Bauplatten, Bauelemente oder als Bauteile von Kühlgeräten und anderen wärmedämmenden Hohlkörpern.

Die Erfindung soll im folgenden an einem Beispiel näher verdeutlicht werden.

### Beispiel:

### a) Herstellung eines SiO₂-Xerogel-Granulats

2 I einer Natriumwasserglaslösung (SiO₂-Gehalt 6 Gew.-% und Na₂O:SiO₂ Verhältnis von 2:3) wurden über eine ummantelte Glaskolonne (Länge = 100 cm, Durchmesser = 8 cm), die mit 1 l eines sauren Ionentauscherharzes (Styroldivinylbenzol-Copolymer mit Sulfonsäuregruppe, handelsüblich unter dem Namen ®Duolite C 20) gefüllt war, geleitet (ca. 70 ml/min). Die Kolonne wurde bei einer Temperatur von 5 °C betrieben. Die am unteren Ende der Kolonne ablaufende Kieselsäurelösung hatte einen pH-Wert von 1,2. Diese Lösung wurde mit einer 0,5 molaren NH₄OH-Lösung auf einen pH von 5,5 gebracht und anschließend mit Hilfe einer Ultraschalldüse versprüht. Das feuchte Gelgranulat wurde noch 24 Stunden bei 50 °C und einem pH-Wert von 6 nachgereift. Anschließend wurde das Wasser mit 6 I Aceton bei 50 °C extrahiert und das acetonhaltige Gel mit Trimethylchlorsilan (TMCS) silyliert (0,05 g TMCS pro Gramm nasses Gel, Reaktionsdauer 4 Stunden bei 50 °C) und dann nochmals mit 1 l Aceton nachgewaschen. Die Trocknung des Gels erfolgte an der Luft (3 Stunden bei 40 °C, dann 2 Stunden bei 50 °C und 12 Stunden bei 150 °C).

Das so erhaltene, transparente SiO₂-Xerogel-Granulat hatte eine Schüttdichte von ca. 0,1 g/cm³. Die spezifische Oberfläche nach BET lag bei 950 m²/g und die Wärmeleitfähigkeit bei 0,021 W/mK. Der Teilchendurchmesser betrug 0,1 bis 1 mm.

Die Wärmeleitfähigkeit wurde mit einer Heizdrahtmethode (s. z.B. O. Nielsson, G. Rüschenpöhler, J. Groß, J. Fricke, High-Temperatures-High-Pressures, Vol. 21, 267-274 (1989)) gemessen.

### b) Herstellung eines SiO₂-Xerogel-Polyurethan-Verbundschaumstoffes

Eine nicht gasdicht schließende Plattenform vom 50 cm x 50 cm x 4 cm wurde mit 800 g der unter a) hergestellten SiO₂-Xerogel-Partikel nahezu vollständig gefüllt, und anschließend wurde ein Gemisch folgender Zusammensetzung aufgegeben:
65 g eines Polyethers der Hydroxylzahl 35, welcher durch Anlagerung von Propylenoxid und Ethylenoxid an Glycerin erhalten wurde,
20 g eines Polyethers der Hydroxylzahl 380 auf Basis Saccharose, Propylenglykol und angelagertem Propylenoxid,
15 g eines Reaktionsprodukts aus 1 Mol Nonylphenol und 8 Mol Ethylenoxid,
20 g Wasser,
1 g eines Siloxanpolyether-Copolymers als Schaumstabilisator,
2 g Dimethylethanolamin,
0,2 g Bis-(dimethylaminoethyl)-ether,
120 g rohes 4,4'-Dicyanatodiphenylmethan.

Die Form wurde anschließend verschlossen, wonach die SiO₂-Xerogel-Partikel vom entstehenden Polyurethanschaum umhüllt wurden. Es resultierte nach einer Formstandzeit von 10 Minuten eine harte Verbundschaum-Platte mit einer Dichte von 0,14 g/cm³ und einer anfänglichen Wärmeleitfähigkeit von 0,020 W/mK, die sich im Verlauf von 1 Woche auf 0,022 W/mK erhöhte. Dieser Wert war nach weiterer Lagerung von 2 Monaten unverändert. Der Verbundschaumstoff enthielt 80 Vol.-% SiO₂-Xerogel-Partikel und 20 Vol.-% Polyurethanschaum.

## Patentansprüche

1. Verbundschaumstoff, enthaltend
a) 10 - 90 Vol.-% silylierte SiO₂-Xerogel-Partikel und
b) 90 - 10 Vol.-% eines Kunststoffschaums.

2. Verbundschaumstoff nach Anspruch 1, **dadurch gekennzeichnet, daß** die Gel-Partikel Porositäten über 60 % und Dichten unter 0,6 g/cm³ aufweisen.

3. Verbundschaumstoff nach mindestens einem der Ansprüche 1 bis 2, **dadurch gekennzeichnet, daß** die Gel-Partikel einen Durchmesser aufweisen, der im Bereich von 0,01 bis 30 mm liegt.

4. Verbundschaumstoff nach Anspruch 1, **dadurch gekennzeichnet, daß** der Kunststoffschaum ein Polyurethan- und/oder Polyolefinschaum ist.

5. Verbundschaumstoff nach Anspruch 4, **dadurch gekennzeichnet, daß** der Kunststoffschaum ein Polyurethanschaum ist, der mit Hilfe von CO₂ als Treibmittel geschäumt wurde.

6. Verfahren zur Herstellung eines Verbundschaumstoffs, **dadurch gekennzeichnet, daß** man eine Schüttung aus silylierten SiO₂-Xerogel-Partikeln mit Kunststoffschaum umschäumt, wobei das Volumen der Schüttung 10 bis 90 Vol.-% des beabsichtigten Volumens des Verbundschaumstoffs beträgt.

7. Verfahren nach Anspruch 6, **dadurch gekennzeichnet, daß** man SiO₂Xerogel-Partikel umsetzt, die dadurch erhältlich sind, daß man
a) eine wäßrige Wasserglaslösung mit Hilfe eines sauren lonenaustauscherharzes oder einer Mineralsäure auf einen pH-Wert ≤ 3,0 bringt,
b) die dabei entstandene Kieselsäure durch Zugabe einer Base zu einem SiO₂-Gel polykondensiert und, falls in Schritt a) eine Mineralsäure benutzt wurde, das Gel mit Wasser elektrolytfrei wäscht,
c) das in Schritt b) erhaltene Gel mit einem organischen Lösungsmittel solange wäscht, bis der Wassergehalt des Gels ≤ 5 Gew.-% ist,
d) das in Schritt c) erhaltene Gel mit einem Silylierungsmittel umsetzt,
e) das in Schritt d) erhaltene silylierte Gel bei -30 bis 200 °C und 0,001 bis 20 bar trocknet.

8. Verwendung des Verbundschaumstoffs gemäß mindestens einem der Ansprüche 1 bis 5 zur Wärmedämmung.

## Claims

1. A foam laminate, containing
a) 10-90 percent by volume of silylated SiO₂ Xerogel particles
and
b) 90-10 percent by volume of a foam laminate.

2. A foam laminate according to claim 1, **characterised in that** the gel particles have porosities of over 60% and densities less than 0.6 g/cm³.

3. A foam laminate according to at least one of claims 1 - 2, **characterised in that** the gel particles have a diameter in the range of 0.01 through to 30 mm.

4. A foam laminate according to claim 1, **characterised in that** the foam laminate is a polyurethane foam and/or polyolefin foam.

5. A foam laminate according to claim 4, **characterised in that** the plastic foam is a polyurethane, which has been foamed with the aid of CO₂ as the blowing agent.

6. A process for producing a foam laminate, **characterised in that** a heap of silylated SiO₂ Xerogel particles is enveloped in a plastic foam, whereby the volume of the heap is 10 - 90 percent by volume of the intended volume of the foam laminate.

7. A process according to claim 6, **characterised in that** SiO₂ Xerogel particles are converted by
a) Bringing an aqueous water glass solution to a pH value of ≤ 3.0 using an acidic ion exchanger resin or a mineral acid,
b) Polycondensating the resulting silicic acid, by adding a base to form SiO₂ gel and, if a mineral acid was used in step a), washing the gel free of electrolyte with water,
c) Washing the gel obtained in step b) using an organic solvent, until the water content of the gel is ≤ 5 percent by weight,
d) Converting the gel obtained in step c) using a silylating agent,
e) Drying the silylated gel obtained in step d) at a temperature of -30 to 200 °C and a pressure of 0.001 - 20 bar.

8. The use of the foam laminate in accordance with at least one of the claims 1 through 5, for the purpose of heat insulation.

## Revendications

1. Mousse composite contenant
a) de 10 à 90 % vol. de particules d'aérogel de SiO₂ silylé
et
b) de 90 à 10 % en volume d'une mousse de matière synthétique.

2. Mousse composite selon la revendication 1, **caractérisée en ce que** les particules de gel présentent des porosités supérieures à 60 % et des masses volumiques inférieures à 0,6 g/cm³.

3. Mousse composite selon l'une des revendications 1 ou 2, **caractérisée en ce que** les particules de gel présentent un diamètre qui se trouve dans le domaine de 0,01 à 30 mm.

4. Mousse composite selon la revendication 1, **caractérisée en ce que** la mousse de matière synthétique est une mousse de polyuréthanne et/ou polyoléfine.

5. Mousse composite selon la revendication 4, **caractérisée en ce que** la mousse composite de matière synthétique est une mousse de polyuréthanne expansée à l'aide de CO₂ comme agent d'expansion.

6. Procédé pour la préparation d'une mousse composite, **caractérisé en ce qu'**on enrobe de mousse de matière synthétique une matière en vrac de particules de xérogel de SiO₂ silylées, le volume de la matière en vrac étant de 10 à 90 % en volume du volume recherché de la mousse composite.

7. Procédé selon la revendication 6, **caractérisé en ce qu'**on fait réagir des particules de xérogel de SiO₂ que l'on peut obtenir par
a) établissement d'un pH ≤ 3,0 dans une solution aqueuse à l'aide d'une résine échangeuse d'ions acide ou d'un acide minéral,
b) polycondensation de l'acide silicique en formation par ajout d'une base pour donner un gel de SiO₂ et, si on utilise à l'étape a) un acide minéral, on lave le gel jusqu'à l'absence d'électrolyte,
c) lavage du gel obtenu à l'étape b) par un solvant organique jusqu'à ce que la teneur en eau du gel ≤ 5,0 % en poids,
d) réaction du gel obtenu à l'étape c) sur un agent de silylation,
e) séchage su gel silylé obtenu à l'étape d) à une température de -30 à 200°C et une pression de 0,001 à 20 bars.

8. Utilisation de la mousse composite selon au moins l'une des revendications 1 à 5 pour le calorifugeage.
